# EUROPEAN PATENT APPLICATION

(11) **EP 4 668 815 A1**
(43) Date of publication of application: **24.12.2025**
(21) Application number: 24773927.9
(22) Date of filing: 07.03.2024
(51) Int. Cl.: H04W 12/0433

(54) **COMMUNICATION METHOD AND APPARATUS AND STORAGE MEDIUM**

(30) Priority: 20.03.2023 CN 202310273426
(71) Applicant: China Mobile Communication Co., Ltd Research Institute, Beijing 100053 (CN); China Mobile Communications Group Co., Ltd., Beijing 100032 (CN)
(72) Inventor: TIAN, Ye, Beijing 100053 (CN)
(74) Representative: Murgitroyd & Company
(86) International application number: PCT/CN2024/080605
(87) International publication number: WO 2024/193360

(57) **Abstract**

A communication method and apparatus, and a storage medium are provided, wherein the method includes: a first device sends an indication message to a terminal, wherein the indication message is used to instruct the terminal to perform a re-bootstrapping operation.

## Description

### CROSS-REFERENCE TO RELATED APPLICATION

This application is based on and claims the priority of the Chinese patent application No. 202310273426.3 filed on March 20, 2023, a disclosure of which is incorporated herein by reference in its entirety.

### TECHNICAL FIELD

The present application relates to the field of wireless communications, and in particular, to a communication method and apparatus, and a storage medium.

### BACKGROUND

In the prior art, in an enhanced Generic Bootstrapping Architecture (GBA) system, after an enhanced GBA processing procedure is complete, a network service side and a User Equipment (UE) can communicate using a shared session key K*. The session key K* must be generated after the UE proactively requests authentication. The network service side cannot request re-authentication of the UE identity or regenerate a new GBA application-layer session key K*.

Similar to the enhanced GBA system, in the enhanced Authentication and Key Management for Applications (AKMA) system, the session key KA* used must also be generated after the UE proactively requests authentication. The network service side likewise cannot require re-authentication of the UE identity or regenerate a new session key KA*.

### SUMMARY

In view of the above, an object of the present application is to provide a communication method and apparatus and a storage medium.

To achieve the above object, the technical solution of the present application is implemented as follows.

In a first aspect, an embodiment of the present application provides a communication method, performed by a first device, the method including:
sending an indication message to a terminal, wherein the indication message is used to instruct the terminal to perform a re-bootstrapping operation.

In an embodiment, the method further includes: receiving uplink data from the terminal, wherein the uplink data includes at least data encrypted with a first key, the first key is a Generic Bootstrapping Architecture (GBA) application session key or an Authentication and Key Management for Applications (AKMA) application session key;
the sending the indication message to the terminal includes:
sending the indication message to the terminal when the first key fails to meet a key validity condition set by the first device according to a security policy, or when it is necessary to trigger an update of the first key.

In an embodiment, the first key fails to meet the key validity condition set by the first device according to the security policy, including at least one of the followings:
that an upper limit of reuse times of the first key has been reached;
an application-allowed usage duration of the first key has been reached; or
that the first key has been exposed externally.

In an embodiment, the sending the indication message to the terminal includes one of the followings:
directly sending the indication message to the terminal; or
sending the indication message to a second device, wherein the indication message is sent by the second device to the terminal.

In an embodiment, the receiving the uplink data from the terminal includes one of the followings:
receiving the uplink data directly sent by the terminal; or
receiving the uplink data sent by a second device, wherein the uplink data is sent from the terminal to the second device.

In an embodiment, in the case that the first device communicates directly with the terminal, uplink data and/or the indication message are transmitted based on at least one of the following protocols:
Hypertext Transfer Protocol (HTTP), Constrained Application Protocol (CoAP), Message Queuing Telemetry Transport (MQTT) Protocol, or a predefined private protocol.

In an embodiment, in the case that the first device communicates with the terminal via a second device, uplink data and/or the indication message are transmitted based on HTTP.

In an embodiment, the method further includes:
receiving a new first key and/or key lifetime sent by a second device, and updating a local first key and/or key lifetime.

In an embodiment, when the method is applied to a Generic Bootstrapping Architecture (GBA) system, the first device is a server, and a second device includes a Network Application Function (NAF) and/or an Authentication Proxy (AP).

In an embodiment, when the method is applied to an Authentication and Key Management for Applications (AKMA) system, the first device includes an Application Function (AF) and/or a server, and
a second device includes at least one of the followings: an AKMA Anchor Function (AanF), an AKMA Authentication Proxy (AAP), an Authentication Proxy (AP), or a Network Element Function (NEF).

In a second aspect, an embodiment of the present application provides a communication method, executed by a terminal, the method including:
receiving an indication message from a first device; wherein the indication message is used to instruct the terminal to perform a re-bootstrapping operation;
sending a re-bootstrapping request message to a third device.

In an embodiment, the receiving the indication message from the first device includes one of the followings:
receiving the indication message directly sent by the first device;
receiving the indication message sent by a second device, wherein the indication message is sent by the first device to the second device.

In an embodiment, the method further includes:
sending uplink data to the first device, wherein the uplink data includes at least data encrypted with a first key; the first key is a Generic Bootstrapping Architecture (GBA) application session key or an Authentication and Key Management for Applications (AKMA) application session key.

In an embodiment, the sending the uplink data to the first device includes one of the followings:
directly sending the uplink data to the first device; or
sending the uplink data to a second device, wherein the uplink data is sent by the second device to the first device.

In an embodiment, in the case that the first device communicates directly with the terminal, uplink data and/or the indication message are transmitted based on at least one of the following communication protocols:
Hypertext Transfer Protocol (HTTP), Constrained Application Protocol (CoAP), Message Queuing Telemetry Transport (MQTT) protocol, or a predefined private protocol.

In an embodiment, in the case that the first device communicates with the terminal via a second device, uplink data and/or the indication message are transmitted based on HTTP.

In an embodiment, the method further includes:
sending a first message to a second device, wherein the first message carries identification information of at least one first device, and the at least one first device is at least one first device that has established an application security association with the terminal and is served by the second device.

In an embodiment, the method further includes: receiving a second message sent by the second device, wherein the second message carries all or part of update results of the first device updating a first key and/or key lifetime.

In an embodiment, the method further includes:
generating, based on a second key, a corresponding new first key for each of the at least one first device, and storing the corresponding new first key;
wherein the second key is a shared key negotiated between the terminal and the second device by re-executing a Generic Bootstrapping Architecture (GBA) bootstrapping procedure and a GBA bootstrapping security association usage procedure.

In an embodiment, when the method is applied to a Generic Bootstrapping Architecture (GBA) system, the first device is a server, and a second device includes a Network Application Function (NAF) and/or an Authentication Proxy (AP), and the third device is a Bootstrapping Server Function (BSF).

In an embodiment, when the method is applied to an Authentication and Key Management for Applications (AKMA) system, the first device includes an (Application Function) AF and/or a server, and a second device includes at least one of the followings: an AKMA Anchor Function (AanF), an AKMA Authentication Proxy (AAP), an Authentication Proxy (AP), or a Network Element Function (NEF), and the third device includes: an AAnF and/or an AAP.

In a third aspect, an embodiment of the present application provides a communication method, performed by a second device, the method including:
receiving a first message sent by a terminal; wherein the first message carries identification information of at least one first device; and the at least one first device is at least one first device that has established an application security association with the terminal and is served by the second device.

In an embodiment, the method further includes:
generating, according to the identification information of at least one first device in the first message, a respective new first key and/or key lifetime corresponding to each of the at least one first device;
sending the new first key and/or key lifetime to the corresponding first device.

In an embodiment, the method further includes:
sending a respective third message to each of the at least one first device according to the identification information of at least one first device in the first message, wherein the third message carries identification information corresponding to the first device;
receiving a fourth message sent by each of the at least one first device;
generating a respective corresponding new first key and/or key lifetime for each of the at least one first device;
sending the corresponding new first key and/or key lifetime to each of the at least one first device.

In an embodiment, the method further includes:
determining a key transmission mode adopted by the at least one first device;
when the first device adopts a push mode, generating a new first key and/or key lifetime corresponding to the first device according to the identification information of the first device, and sending the new first key and/or key lifetime to the corresponding first device; and/or
when the first device adopts a request mode, sending a third message to the first device according to the identification information of the first device, wherein the third message carries the identification information of the first device;
receiving a fourth message sent by the first device;
generating a new first key and/or key lifetime corresponding to the first device;
sending the new first key and/or key lifetime to the first device.

In an embodiment, the method further includes:
generating, based on a second key, a corresponding new first key for each of the at least one first device, and storing the corresponding new first key;
wherein the second key is a shared key negotiated between the terminal and the second device by re-executing a Generic Bootstrapping Architecture (GBA) bootstrapping procedure and a GBA bootstrapping security association usage procedure.

In an embodiment, the method further includes at least one of the followings:
receiving, from each of the at least one first device, a result indicating successful reception of the new first key and/or key lifetime;
receiving, from each of the at least one first device, a result indicating failure to receive the new first key and/or key lifetime; or
failing to receive, from the first device, a result indicating successful reception of the new first key and/or key lifetime.

In an embodiment, the method further includes:
sending a second message to the terminal, wherein the second message carries all or part of update results of the first device updating a first key and/or key lifetime.

In an embodiment, the method further includes:
receiving an indication message from the first device; wherein the indication message is used to instruct the terminal to perform a re-bootstrapping operation;
sending the indication message to the terminal.

In an embodiment, the method further includes:
receiving uplink data from a terminal, wherein the uplink data includes at least service data encrypted with a first key;
sending the uplink data to the first device.

In an embodiment, when the method is applied to a Generic Bootstrapping Architecture (GBA) system, the first device is a server, and a second device includes a Network Application Function (NAF) and/or an Authentication Proxy (AP).

In an embodiment, when the method is applied to an Authentication and Key Management for Applications (AKMA) system, the first device includes an (Application Function) AF and/or a server, and a second device includes at least one of the followings: an AKMA Anchor Function (AanF), an AKMA Authentication Proxy (AAP), an Authentication Proxy (AP), or a Network Element Function (NEF).

In a fourth aspect, an embodiment of the present application provides a communication apparatus, applied to a first device, the apparatus including:
a first sending module, configured to send an indication message to a terminal; wherein the indication message is used to instruct the terminal to perform a re-bootstrapping operation.

In an embodiment, the apparatus further includes: a first receiving module, configured to receive uplink data from the terminal, wherein the uplink data includes at least data encrypted with a first key; the first key is a GBA application session key or an AKMA application session key;
a first sending module, configured to send the indication message to the terminal when the first key fails to meet a key validity condition set by the first device according to a security policy, or when it is necessary to trigger an update of the first key.

In an embodiment, the first key fails to meet the key validity condition set by the first device according to the security policy, including at least one of the followings:
that an upper limit of reuse times of the first key has been reached;
an application-allowed usage duration of the first key has been reached; or
that the first key has been exposed externally.

In an embodiment, the first sending module is configured to perform one of the followings:
directly sending the indication message to the terminal; or
sending the indication message to a second device, wherein the indication message is sent by the second device to the terminal.

In an embodiment, the first receiving module is configured to perform one of the followings:
receiving the uplink data directly sent by the terminal; or
receiving the uplink data sent by a second device, wherein the uplink data is sent from the terminal to the second device.

In an embodiment, in the case that the first device communicates directly with the terminal, uplink data and/or the indication message are transmitted based on at least one of the following protocols:
Hypertext Transfer Protocol (HTTP), Constrained Application Protocol (CoAP), Message Queuing Telemetry Transport (MQTT) Protocol, or a predefined private protocol.

In an embodiment, in the case that the first device communicates with the terminal via a second device, uplink data and/or the indication message are transmitted based on HTTP.

In an embodiment, the first receiving module is further configured to receive a new first key and/or key lifetime sent by a second device, and updating a local first key and/or key lifetime.

In an embodiment, when the apparatus is applied to a Generic Bootstrapping Architecture (GBA) system, the first device is a server, and a second device includes a Network Application Function (NAF) and/or an Authentication Proxy (AP).

In an embodiment, when the apparatus is applied to an Authentication and Key Management for Applications (AKMA) system, the first device includes an Application Function (AF) and/or a server, and a second device includes at least one of the followings: an AKMA Anchor Function (AanF), an AKMA Authentication Proxy (AAP), an Authentication Proxy (AP), or a Network Element Function (NEF).

In a fifth aspect, an embodiment of the present application provides a communication apparatus, applied to a terminal, the apparatus including:
a second receiving module is configured to receive an indication message from a first device; wherein the indication message is used to instruct the terminal to perform a re-bootstrapping operation;
a second sending module is configured to send a re-bootstrapping request message to a third device.

In an embodiment, the second receiving module is configured to perform one of the followings:
receiving the indication message directly sent by the first device;
receiving the indication message sent by a second device, wherein the indication message is sent by the first device to the second device.

In an embodiment, the second sending module is further configured to send uplink data to the first device, wherein the uplink data includes at least data encrypted with a first key; the first key is a Generic Bootstrapping Architecture (GBA) application session key or an Authentication and Key Management for Applications (AKMA) application session key.

In an embodiment, the second sending module is configured to perform one of the followings:
directly sending the uplink data to the first device; or
sending the uplink data to a second device, wherein the uplink data is sent by the second device to the first device.

In an embodiment, in the case that the first device communicates directly with the terminal, uplink data and/or the indication message are transmitted based on at least one of the following communication protocols:
Hypertext Transfer Protocol (HTTP), Constrained Application Protocol (CoAP), Message Queuing Telemetry Transport (MQTT) protocol, or a predefined private protocol.

In an embodiment, in the case that the first device communicates with the terminal via a second device, uplink data and/or the indication message are transmitted based on HTTP.

In an embodiment, the second sending module is further configured to send a first message to a second device, wherein the first message carries identification information of at least one first device, and the at least one first device is at least one first device that has established an application security association with the terminal and is served by the second device.

In an embodiment, the second receiving module is further configured to receive a second message sent by the second device, wherein the second message carries all or part of update results of the first device updating a first key and/or key lifetime.

In an embodiment, the apparatus further includes: a second processing module, configured to generate, based on a second key, a corresponding new first key for each of the at least one first device, and storing the corresponding new first key;
wherein the second key is a shared key negotiated between the terminal and the second device by re-executing a Generic Bootstrapping Architecture (GBA) bootstrapping procedure and a GBA bootstrapping security association usage procedure.

In an embodiment, when the apparatus is applied to a Generic Bootstrapping Architecture (GBA) system, the first device is a server, and a second device includes a Network Application Function (NAF) and/or an Authentication Proxy (AP), and the third device is a Bootstrapping Server Function (BSF).

In an embodiment, when the apparatus is applied to an Authentication and Key Management for Applications (AKMA) system, the first device includes an (Application Function) AF and/or a server, and a second device includes at least one of the followings: an AKMA Anchor Function (AanF), an AKMA Authentication Proxy (AAP), an Authentication Proxy (AP), or a Network Element Function (NEF), and the third device includes: an AAnF and/or an AAP.

In a sixth aspect, an embodiment of the present application provides a communication apparatus, executed by a second device, the apparatus including:
a third receiving module, configured to receive a first message sent by a terminal; wherein the first message carries identification information of at least one first device; and the at least one first device is at least one first device that has established an application security association with the terminal and is served by the second device.

In an embodiment, the apparatus further includes: a third processing module, configured to generate, according to the identification information of multiple first devices in the first message, a respective new first key and/or key lifetime corresponding to each of the at least one first device;
the apparatus further includes: a third sending module, configured to send the new first key and/or key lifetime to the corresponding first device.

In an embodiment, the third sending module is further configured to send a respective third message to each of the at least one first device according to the identification information of at least one first device in the first message, wherein the third message carries identification information corresponding to the first device;
the third receiving module is further configured to receive a fourth message sent by each of the at least one first device;
the third processing module is further configured to generate a respective corresponding new first key and/or key lifetime for each of the at least one first device;
the third sending module is further configured to send the corresponding new first key and/or key lifetime to each of the at least one first device.

In an embodiment, the third processing module is further configured to determine a key transmission mode adopted by the at least one first device; when the first device adopts a push mode, generate a new first key and/or key lifetime corresponding to the first device according to the identification information of the first device; and the third sending module is further configured to send the new first key and/or key lifetime to the corresponding first device; and/or
the third sending module is further configured to, when the first device adopts a request mode, send a third message to the first device according to the identification information of the first device, wherein the third message carries the identification information of the first device;
the third receiving module is further configured to receive a fourth message sent by the first device;
the third processing module is further configured to generate a new first key and/or key lifetime corresponding to the first device;
the third sending module is further configured to send the new first key and/or key lifetime to the first device.

In an embodiment, the third processing module is further configured to generate, based on a second key, a corresponding new first key for each of the at least one first device, and storing the corresponding new first key;
wherein the second key is a shared key negotiated between the terminal and the second device by re-executing a Generic Bootstrapping Architecture (GBA) bootstrapping procedure and a GBA bootstrapping security association usage procedure.

In an embodiment, the third receiving module is further configured to perform at least one of the followings:
receiving, from each of the at least one first device, a result indicating successful reception of the new first key and/or key lifetime;
receiving, from each of the at least one first device, a result indicating failure to receive the new first key and/or key lifetime; or
failing to receive, from the first device, a result indicating successful reception of the new first key and/or key lifetime.

In an embodiment, the third sending module is further configured to send a second message to the terminal, wherein the second message carries all or part of update results of the first device updating a first key and/or key lifetime.

In an embodiment, the third receiving module is further configured to receive an indication message from the first device; wherein the indication message is used to instruct the terminal to perform a re-bootstrapping operation;
the third sending module is further configured to send the indication message to the terminal.

In an embodiment, the third receiving module is further configured to receive uplink data from a terminal, wherein the uplink data includes at least service data encrypted with a first key;
the third sending module is further configured to send the uplink data to the first device.

In an embodiment, when the apparatus is applied to a Generic Bootstrapping Architecture (GBA) system, the first device is a server, and a second device includes a Network Application Function (NAF) and/or an Authentication Proxy (AP).

In an embodiment, when the apparatus is applied to an Authentication and Key Management for Applications (AKMA) system, the first device includes an (Application Function) AF and/or a server, and a second device includes at least one of the followings: an AKMA Anchor Function (AanF), an AKMA Authentication Proxy (AAP), an Authentication Proxy (AP), or a Network Element Function (NEF).

In a seventh aspect, an embodiment of the present application provides a communication apparatus, including a memory, a processor, and a computer program stored on the memory and executable on the processor, wherein the processor is configured to execute the program to implement the steps of any one of the methods executed on the first device side; or, the processor is configured to execute the program to implement the steps of any one of the methods executed on the terminal side; or, the processor is configured to execute the program to implement the steps of any one of the methods executed on the second device side.

In an eighth aspect, an embodiment of the present application provides a computer-readable storage medium storing a computer program, wherein the computer program is used to be executed by a processor to implement the steps of any one of the methods executed on the first device side; or, the computer program is used to be executed by a processor to implement the steps of any one of the methods executed on the terminal side; or, the computer program is used to be executed by a processor to implement the steps of any one of the methods executed on the second device side.

An embodiment of the present application provides a communication method and apparatus, and a storage medium, the method including: a first device sends an indication message to a terminal, the indication message is used to instruct the terminal to perform a re-bootstrapping operation; accordingly, the terminal receives the indication message from the first device; sends a re-bootstrapping request message to a third device; and a second device receives a first message sent by the terminal; the first message carries identification information of at least one first device, wherein the at least one first device is at least one first device that has established an application security association with the terminal and is served by the second device. In this way, the first device can proactively send a re-bootstrapping indication message to the terminal, allowing the terminal to re-execute security mechanisms and re-establish an application-layer security association.

### BRIEF DESCRIPTION OF THE DRAWINGS

FIG. 1 is a diagram of the GBA system network architecture in a 4G network environment;
FIG. 2 is a diagram of an enhanced GBA system architecture;
FIG. 3 is a diagram of the basic architecture of AKMA;
FIG. 4 is an enhanced AKMA system architecture;
FIG. 5 is a flow chart of a 3GPP standard bootstrapping re-negotiation method;
FIG. 6 is a schematic flow chart of a communication method provided by an embodiment of the present application;
FIG. 7 is a schematic flow chart of another communication method provided by an embodiment of the present application;
FIG. 8 is a schematic flow chart of yet another communication method provided by an embodiment of the present application;
FIG. 9 is a schematic flow chart of a re-bootstrapping method for a GBA system provided by an embodiment of the present application;
FIG. 10 is a schematic flow chart of another re-bootstrapping method for a GBA system provided by an embodiment of the present application;
FIG. 11 is a schematic flow chart of a re-bootstrapping method for an enhanced AKMA system provided by an embodiment of the present application;
FIG. 12 is a schematic flow chart of another re-bootstrapping method for an enhanced AKMA system provided by an embodiment of the present application;
FIG. 13 is a schematic flow chart of a re-bootstrapping method for a GBA system with multiple servers provided by an embodiment of the present application;
FIG. 14 is a schematic flow chart of another re-bootstrapping method for a GBA system with multiple servers provided by an embodiment of the present application;
FIG. 15 is a schematic flow chart of a method for determining a second key provided by an embodiment of the present application;
FIG. 16 is a schematic structural diagram of a communication apparatus provided by an embodiment of the present application;
FIG. 17 is a schematic structural diagram of another communication apparatus provided by an embodiment of the present application;
FIG. 18 is a schematic structural diagram of yet another communication apparatus provided by an embodiment of the present application;
FIG. 19 is a schematic structural diagram of a communication device provided by an embodiment of the present application.

### DETAILED DESCRIPTION

Before providing a detailed description of the present application, the related technical methods are described first.

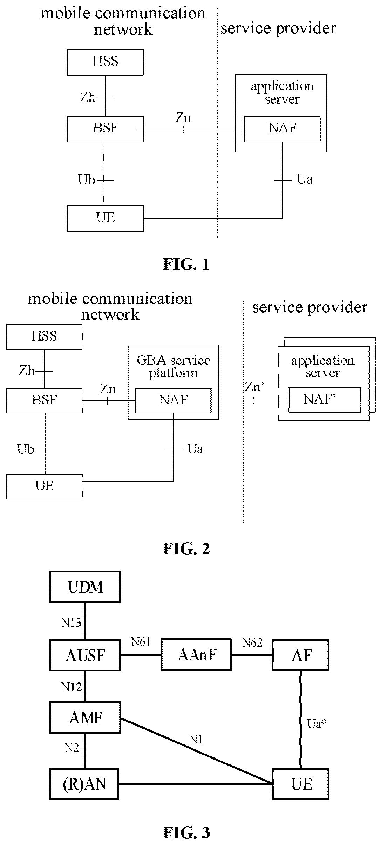

Generic Bootstrapping Architecture (GBA), defined by the 3rd Generation Partnership Project (3GPP), is a universal authentication and session key agreement method. Based on mobile communication networks and the Universal Subscriber Identity Module (USIM), the GBA provides complete security authentication and application-layer session channel encryption services for application-layer services. The GBA system can be implemented on either the 4th Generation Mobile Communication Technology (4G) or the 5th Generation Mobile Communication Technology (5G) network. The network architecture of the GBA system in a 4G network environment is shown in FIG. 1. The system architecture for the 5G network is similar, with a Home Subscriber Server (HSS) replaced by Unified Data Management (UDM).

In the standard GBA architecture, a Network Application Function (NAF) network element is integrated with the server and deployed externally on a service provider side. The NAF network element uses the GBA security mechanisms of the 4G /5G cellular network to perform authentication and key agreement (AKA) with the terminal device accessing the server. After successful authentication, the NAF obtains the GBA session key Ks_NAF which is shared with the terminal, from the Bootstrapping Server Function (BSF) element. This establishes a security association, and enables secure communication between the terminal and the server based on Ks_NAF.

However, in the 3GPP standard GBA architecture, the NAF network element is deployed externally and integrated with an external server on the service provider side. Each NAF network element can only provide GBA security services for the application service associated with it and cannot serve multiple applications. As a result, this deployment method leads to high GBA application costs and is not conducive to large-scale deployment and promotion of GBA technology.

To improve the utilization rate of the NAF network element equipment and reduce the operation and maintenance costs of the mobile operator network, as shown in FIG. 2, an enhanced GBA system architecture has been proposed. In this system, the NAF network elements are deployed on the operator network side rather than the service provider side, enabling the operator to build a GBA service platform based on NAF network element and provide the security service for multiple different servers. The server interacts with the NAF network element through an integrated and streamlined NAF service function processing module to implement enhanced GBA security authentication and key negotiation mechanisms. After performing the GBA AKA authentication for the terminal (UE), the server obtains the application-layer session key K*, which is derived from Ks_NAF, from the NAF network element, establishes an application-layer security association, and achieves secure communication with the terminal based on K*. In FIG. 2, Zh, Ub, Zn, Ua, and Zn' are all interfaces involved in the communication process.

To better integrate with the 5G network based on a Service-Based Architecture (SBA), the 3GPP has defined the application-layer Authentication and Key Management (AKMA) process with reference to a GBA handling mechanism. The AKMA is an upgrade of the GBA in the 5G system. Similar to the GBA, it authenticates the UE based on 3GPP security credentials and negotiates an AKMA session key (Key for Application Function, KAF) for shared use between the server and the UE. The KAF is equivalent to the Ks_NAF in the GBA. FIG. 3 shows a basic AKMA architecture. As shown in FIG. 3, the main network elements of AKMA and GBA perform largely the same functions. The AKMA Anchor Function (AAnF) is similar to the Bootstrapping Server Function (BSF), and the Application Function (AF) is similar to the Network Application Function (NAF), so they will not be elaborated on here. In FIG. 3, N13, N12, N2, N61, N62, N1, and Ua* are all interfaces involved in the communication process.

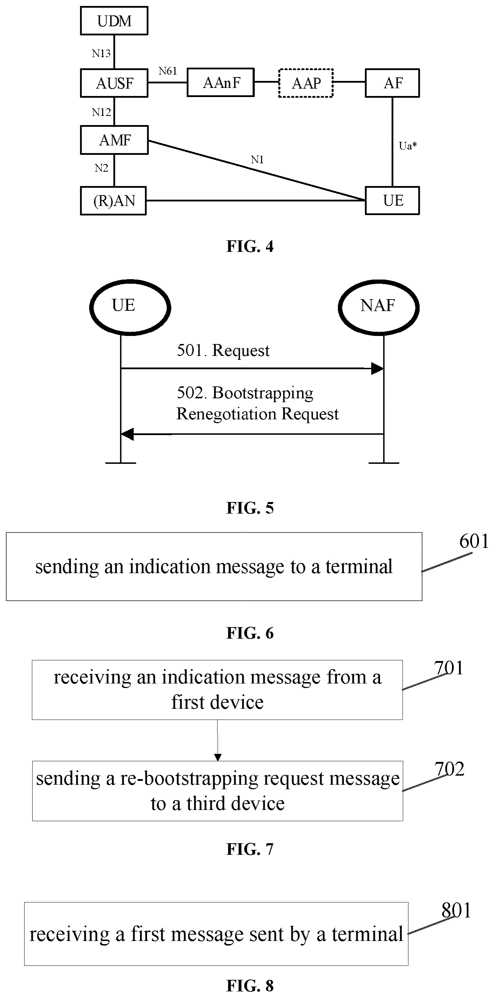

To reduce operator operation and maintenance costs and enable one-to-many secure service delivery, an enhanced AKMA mechanism has been proposed based on the enhanced GBA mechanism, and the architecture thereof is shown in FIG. 4. This mechanism introduces an AKMA Authentication Proxy (AAP) network element between the AAnF and the AF. The AAP can generate different AKMA application-layer session keys (KA*) for different servers based on a single KAF, thereby providing the service for multiple servers. In this case, the AAP network element is equivalent to the NAF in the enhanced GBA, the AF is equivalent to the NAF', and KA* is equivalent to K*.

In the enhanced GBA system, after the enhanced GBA security processing procedure is completed, in the case that the server and the terminal (UE) already possess a shared GBA application-layer session key K*, there is a situation where the server, for security reasons, proactively requests re-authentication of the terminal (UE) identity and regenerates a new GBA application-layer session key K*, thereby completely resetting the GBA operating mechanism.

To address the application requirement for re-establishing a security association, the 3GPP standard proposes a "bootstrapping renegotiation request" procedure. This procedure requires the terminal (UE) to re-execute the GBA security mechanism, and after completing the GBA AKA authentication again, obtain and use a new GBA session key Ks_NAF for secure communication. As shown in FIG. 5, the 3GPP standard bootstrapping renegotiation request procedure includes the following steps.

Step 501: the terminal (UE) sends a service request (request) to the NAF network element (i.e., server); the service request may be a Hyper Text Transfer Protocol (HTTP) message.

Step 502: after receiving the service request from the UE, the NAF network element sends a bootstrapping renegotiation request to the UE, requiring the UE to re-execute the GBA security mechanism to obtain a new key.

However, the above solution is only applicable to a standard 3GPP GBA system and not applicable to an enhanced GBA system. Therefore, for the enhanced GBA system architecture, it is necessary to propose a technical solution that supports the server in re-establishing the GBA application layer security association.

In addition, similar problem also exists in the enhanced AKMA system.

Based on this, in the method provided by an embodiment of the present application, the first device sends an indication message to the terminal; the indication message is used to instruct the terminal to perform a re-bootstrapping operation; accordingly, the terminal receives the indication message from the first device; sends a re-bootstrapping request message to the third device; and the terminal sends a first message to the second device; the first message carries identification information of multiple first devices, and the multiple first devices are multiple first devices that have established an application security association with the terminal and are served by the second device.

FIG. 6 is a schematic flow chart of a communication method provided by an embodiment of the present application. As shown in FIG. 6, the method can be applied to a first device, and the method includes the following steps.

Step 601: sending an indication message to a terminal, wherein the indication message is used to instruct the terminal to perform a re-bootstrapping operation.

In practical applications, when the method is applied to a GBA system or an enhanced GBA system, the first device may be a server, and the second device may include a Network Application Function (NAF) and/or an Authentication Proxy (AP).

The re-bootstrapping operation may also be referred to as a bootstrapping renegotiation process. Its purpose is to enable the terminal device to re-execute the GBA bootstrapping procedure, re-authenticate the identity, and negotiate a new GBA session key (Ks_NAF). The embodiment of the present application does not limit the naming of the re-bootstrapping operation, as long as the corresponding functionality can be achieved.

In practical applications, when the method is applied to an AKMA system or an enhanced AKMA system, the first device may include an Application Function (AF) and/or a server. The second device may include at least one of the followings: an AKMA Anchor Function (AAnF), an AKMA Authentication Proxy (AAP), an Authentication Proxy(AP), or a Network Element Function (NEF). In an example, the second device may include: an AAnF, an AAP, and/or an NEF; in another example, the second device may include: an AAnF, an AP, and/or an NEF; in yet another example, the second device may include one or more of an AAnF, an AAP, an AP, and an NEF. The present application is not limited thereto.

The re-bootstrapping operation may also be described as re-initiating the AKMA process. The embodiment of the present application does not limit the naming of the re-bootstrapping operation, as long as the corresponding function can be achieved.

It should be noted that the embodiments of the present application do not limit the naming of the first device or the second device, as long as the functions of the first device and the second device can be achieved.

In some embodiments, the indication message is used to instruct the terminal to perform a re-bootstrapping operation.

In an example, the indication message may be an HTTP 401 Unauthorized message; in another example, the indication message may be in other formats or be a message carrying a corresponding re-bootstrapping operation instruction. The present application is not limited thereto.

In some embodiments, the method further includes:
receiving uplink data from the terminal, wherein the uplink data includes at least data encrypted with a first key,
the first key is a Generic Bootstrapping Architecture (GBA) application session key or an Authentication and Key Management for Applications (AKMA) application session key;
the sending the indication message to the terminal includes:
   sending the indication message to the terminal when the first key fails to meet a key validity condition set by the first device according to a security policy, or when it is necessary to trigger an update of the first key.

In some embodiments, the first key fails to meet the key validity condition set by the first device according to the security policy, including at least one of the followings:
that an upper limit of reuse times of the first key has been reached;
an application-allowed usage duration of the first key has been reached; or
that the first key has been exposed externally.

For example, the method is applied to a server in an enhanced GBA system. After the enhanced GBA security processing procedure is completed, in the case that the server and the terminal (UE) already possess a shared GBA application-layer session key K* (i.e., the first key), there is a situation where the server, for security reasons, proactively requests re-authentication of the terminal identity and regenerates a new GBA application-layer session key K*, thereby resetting the operational state of the GBA mechanism so that the server can re-establish a GBA application-layer security association with the terminal. For example:
the first key has reached an upper limit of reuse times, such as K* has reached the upper limit of the reuse times;
the first key has reached an application-allowed usage duration, such as K* is invalid or no longer fresh, K* has exceeded or is about to exceed the key lifetime, etc.;
the server fails to obtain K*, for example, because a Bootstrapping Transaction Identifier (B-TID) used to obtain K* is invalid, resulting in the server failing to obtain K* from the second device (such as the NAF).

After recovering from an abnormal condition, the server needs to proactively re-establish the application-layer security association with the terminal, when the shared K* between the server and the terminal is inconsistent, or in other situations.

For the above situation where the server needs to actively re-establish the security association, the present application proposes a GBA re-bootstrapping procedure to enable the server to proactively restart the enhanced GBA security mechanism.

In some embodiments, the sending of the indication message to the terminal includes one of the followings:
directly sending the indication message to the terminal; or
sending the indication message to a second device, wherein the indication message is sent by the second device to the terminal.

Here, the first device sends the indication message to the terminal, which may be sent directly to the terminal, or forwarded to the terminal via the second device.

Here, the second device may send the indication message to the terminal by transparently transmitting the indication message to the terminal, or may perform corresponding modification on the indication message before sending the indication message to the terminal.

The following sending of other messages via the second device is similar to this. The second device may directly and transparently transmit the other messages to the terminal, or may perform corresponding modifications on the other messages before sending them to the terminal. These details will not be repeated here.

In some embodiments, the receiving uplink data from the terminal includes one of the followings:
receiving the uplink data directly sent by the terminal; or
receiving the uplink data sent by a second device, wherein the uplink data is sent from the terminal to the second device.

Here, the terminal sends uplink data to the first device, which may be sent directly to the first device, or forwarded to the first device via the second device.

Here, the second device sends the uplink data sent by the terminal to the first device. The second device may directly and transparently transmit the uplink data to the first device, or may perform corresponding modification on the first data and then send it to the first device. These details will not be repeated here.

The following sending of other data or messages via the second device is similar to this. The second device may directly and transparently transmit the other data or messages to the first device, or may perform corresponding modification on the other data or messages before sending them to the first device.

In some embodiments, in the case that the first device communicates directly with the terminal, uplink data and/or the indication message are transmitted based on at least one of the following protocols:
Hypertext Transfer Protocol (HTTP), Constrained Application Protocol (CoAP), Message Queuing Telemetry Transport (MQTT) protocol, or a predefined private protocol.

In some embodiments, in the case that the first device communicates with the terminal via a second device, uplink data and/or the indication message are transmitted based on HTTP.

In some embodiments, the method further includes:
receiving a new first key and/or key lifetime sent by a second device, and updating a local first key and/or key lifetime.

Here, after receiving the new first key and/or key lifetime, the first device may perform a corresponding update operation to ensure that the used key is the latest key.

In some embodiments, the method may further include at least one of the followings:
sending, to the second device, a result indicating successful reception of the new first key and/or key lifetime; or
sending, to the second device, a result indicating failure to receive the new first key and/or key lifetime.

Here, after receiving the new first key and/or key lifetime, the first device may notify the second device of the result. When the new first key and/or key lifetime is not received within a certain period of time, the second device may also be notified of the result of failed reception or non-receipt.

FIG. 7 is a schematic flow chart of another communication method provided by an embodiment of the present application. As shown in FIG. 7, the method can be applied to a terminal, and the method includes:
step 701: receiving an indication message from a first device; wherein the indication message is used to instruct the terminal to perform a re-bootstrapping operation;
step 702: sending a re-bootstrapping request message to a third device.

In practical applications, when the method is applied to a Generic Bootstrapping Architecture (GBA) system, the first device is a server, and a second device includes a Network Application Function (NAF) and/or an Authentication Proxy (AP), and the third device is a Bootstrapping Server Function (BSF).

The re-bootstrapping operation may also be referred to as a bootstrapping renegotiation process. Its purpose is to enable the terminal device to re-execute the GBA bootstrapping procedure, re-authenticate the identity, and negotiate a new GBA session key (Ks_NAF). The embodiment of the present application does not limit the naming of the re-bootstrapping operation, as long as the corresponding functionality can be achieved.

In practical applications, when the method is applied to an Authentication and Key Management for Applications (AKMA) system, the first device may include an (Application Function) AF and/or a Server, and a second device may include at least one of the followings: an AKMA Anchor Function (AanF), an AKMA Authentication Proxy (AAP), an Authentication Proxy (AP), or a Network Element Function (NEF), and the third device may include an AAnF and/or an AAP, or the third device may include an AAnF and/or an AP, or the third device may include an AAnF, an AAP, and/or an AP. The present application is not limited thereto.

The re-bootstrapping operation may also be described as re-initiating the AKMA process. The embodiment of the present application does not limit the naming of the re-bootstrapping operation, as long as the corresponding function can be achieved.

It should be noted that the embodiments of the present application do not limit the naming of the first device, the second device, or the third device, as long as the functions of the first device, the second device, and the third device can be achieved.

In some embodiments, the receiving the indication message from the first device includes one of the followings:
receiving the indication message directly sent by the first device;
receiving the indication message sent by a second device, wherein the indication message is sent by the first device to the second device.

Here, the second device may send the indication message to the terminal by transparently transmitting the indication message to the terminal, or may perform corresponding modification on the indication message before sending the indication message to the terminal.

In some embodiments, the method further includes:
sending uplink data to the first device, wherein the uplink data includes at least data encrypted with a first key; the first key is a Generic Bootstrapping Architecture (GBA) application session key or an Authentication and Key Management for Applications (AKMA) application session key.

Here, when the method is applied to a GBA system, the first key is a GBA application session key;
when the method is applied to an AKMA system, the first key is an AKMA application session key.

In some embodiments, the sending the uplink data to the first device includes one of the followings:
directly sending the uplink data to the first device; or
sending the uplink data to a second device, wherein the uplink data is sent by the second device to the first device.

Here, the second device may send the uplink data to the first device by transparently transmitting the uplink data to the first device, or may perform corresponding modification on the uplink data before sending the uplink data to the first device.

In some embodiments, in the case that the first device communicates directly with the terminal, uplink data and/or the indication message are transmitted based on at least one of the following communication protocols:
Hypertext Transfer Protocol (HTTP), Constrained Application Protocol (CoAP), Message Queuing Telemetry Transport (MQTT) protocol, or a predefined private protocol.

In some embodiments, in the case that the first device communicates with the terminal via a second device, uplink data and/or the indication message are transmitted based on HTTP.

In some embodiments, the method further includes:
sending a first message to a second device, wherein the first message carries identification information of multiple first devices, wherein the multiple first devices have established an application security association with the terminal and are served by the second device.

Here, that the multiple first device have established an application security association with the terminal and are served by the second device may also be described as: the multiple first devices include those that have established an application security association with the terminal and are served by the second device.

The term "multiple" may also be described as "at least one" that indicating one or more than one, where "more than one" refers to two or more.

The term "served" means that the second device provides security services such as identity authentication and application session keys for them.

When the method is applied to a GBA system or an enhanced GBA system, establishing an application security association means that, prior to initiating a re-bootstrapping execution process, the terminal has completed identity authentication through the enhanced GBA mechanism and, based on a shared first key obtained from the second device (e.g., an NAF and/or an AP), has established a secure channel with the first device (e.g., a server), thereby achieving secure communication with the first device.

In some embodiments, the method further includes:
receiving a second message sent by the second device, wherein the second message carries all or part of update results of the first device updating a first key and/or key lifetime.

In some embodiments, the method further includes:
generating, based on a second key, a corresponding new first key for each of the at least one first device, and storing the corresponding new first key;
wherein the second key is a shared key negotiated between the terminal and the second device by re-executing a Generic Bootstrapping Architecture (GBA) bootstrapping procedure and a GBA bootstrapping security association usage procedure.

Here, considering that if there are multiple first devices, assuming the first device is a server, when one of the multiple servers triggers the terminal to perform a re-bootstrapping procedure, then after the first key of the server is updated on the server side, it is also necessary to update the first keys of the remaining servers. The updated first key serves as the shared key between the terminal and each server.

Here, the terminal can calculate the new first key corresponding to the server based on the second key. For example, a method of generating a GBA application session key based on a shared key (such as a GBA session key) can be used. The calculation method is not limited here.

FIG. 8 is a schematic flow chart of yet another communication method provided by an embodiment of the present application. As shown in FIG. 8, the method can be applied to a second device, and the method includes:
step 801: receiving a first message sent by a terminal, wherein the first message carries identification information of multiple first devices; wherein
the multiple first devices are multiple first devices that have established an application security association with the terminal and are served by the second device.

In practical applications, when the method is applied to a GBA system or an enhanced GBA system, the first device may be a server, and the second device may include an NAF and/or an AP.

In practical applications, when the method is applied to an AKMA system or an enhanced AKMA system, the first device may include an AF and/or a Server, and the second device may include at least one of the followings: AAnF, AAP, AP, or NEF.

It should be noted that the embodiments of the present application do not limit the naming of the first device or the second device, as long as the functions of the first device and the second device can be achieved.

In practical applications, a key push method is provided to achieve key update and push. In some embodiments, the method further includes:
generating, according to the identification information of multiple first devices in the first message, a new first key and/or key lifetime corresponding to each first device;
sending the new first key and/or the key lifetime to the corresponding first device.

Here, a first key push method is provided. It is assumed that the second device includes an NAF and/or AP, and the first device is a server. After receiving a first message from a terminal carrying identification information of each first device (e.g., a server), the second device (e.g., the NAF and/or AP) generates an updated first key and/or key lifetime for each server based on the identification information of each server, and proactively pushes the updated first key and/or key lifetime to each server.

In practical applications, in order to achieve key update and push, another key push method is provided. In some embodiments, the method further includes:
sending a third message to each first device according to the identification information of multiple first devices in the first message, wherein the third message carries the identification information of the corresponding first device;
receiving a fourth message sent by each first device;
generating a respective corresponding new first key and/or key lifetime for each of the at least one first device;
sending the corresponding new first key and/or key lifetime to each of the at least one first device.

Here, a second key push method is provided. It is assumed that the second device includes an NAF and/or AP, and the first device is a server. After receiving identification information of each server sent by a terminal, the second device (e.g., the NAF and/or AP) first sends an application request to the server based on the identification information of each server. Then, each server returns a fourth message (e.g., a User Info Request). Upon receiving the User Info request from each server, the NAF and/or AP generates a corresponding new first key and/or key lifetime for each server, and proactively pushes the new first key and/or key lifetime to each server.

The process of key generation and key push for each server can be performed collectively, that is, after receiving all User Info requests, the NAF and/or AP generates a new first key and/or key lifetime for each server in a unified manner, and then pushes it collectively. Alternatively, the process can be performed separately, that is, upon receiving the User Info request from a particular server, the NAF and/or AP generates a new first key and/or key lifetime for that server and pushes it immediately.

In some embodiments, the method further includes:
determining a key transmission mode adopted by multiple first devices;
when the first device adopts a push mode, generating a new first key and/or key lifetime corresponding to the first device according to the identification information of the first device, and sending the new first key and/or key lifetime to the corresponding first device; and/or
when the first device adopts a request mode, sending a third message to the first device according to the identification information of the first device, wherein the third message carries the identification information of the first device;
receiving a fourth message sent by the first device;
generating a new first key and/or key lifetime corresponding to the first device;
sending the new first key and/or key lifetime to the first device.

Here, the second device may first determine whether the first device (server) adopts a push mode or a request mode, and when the push mode is adopted, the first key push mode is adopted; when the request mode is adopted, the second key push mode is adopted.

In some embodiments, the method further includes:
generating, based on a second key, a corresponding new first key for each of the at least one first device, and storing the corresponding new first key;
wherein the second key is a shared key negotiated between the terminal and the second device by re-executing a Generic Bootstrapping Architecture (GBA) bootstrapping procedure and a GBA bootstrapping security association usage procedure.

Here, the second device can calculate a new first key corresponding to the server based on the second key. For example, a method for generating a GBA application session key based on a shared key (such as a GBA session key) can be used. The calculation method is not limited herein.

In some embodiments, the method further includes at least one of the followings:
receiving, from each of the at least one first device, a result indicating successful reception of the new first key and/or key lifetime;
receiving, from each of the at least one first device, a result indicating failure to receive the new first key and/or key lifetime; or
failing to receive, from the first device, a result indicating successful reception of the new first key and/or key lifetime.

In some embodiments, the method further includes:
sending a second message to the terminal, wherein the second message carries all or part of update results of the first device updating a first key and/or key lifetime.

Here, considering that if there are multiple first devices (such as servers), when one of the multiple servers triggers the terminal to perform a re-bootstrapping procedure, then after the first key of the server is updated on the server side, it is also necessary to update the first keys of the remaining servers. Accordingly, the terminal can obtain the update results of the first keys and/or key lifetimes of all or part of the first devices.

In some embodiments, the method further includes:
receiving an indication message from the first device; wherein the indication message is used to instruct the terminal to perform a re-bootstrapping operation;
sending the indication message to the terminal.

In some embodiments, the method further includes:
receiving uplink data from a terminal, wherein the uplink data includes at least service data encrypted with a first key;
sending the uplink data to the first device.

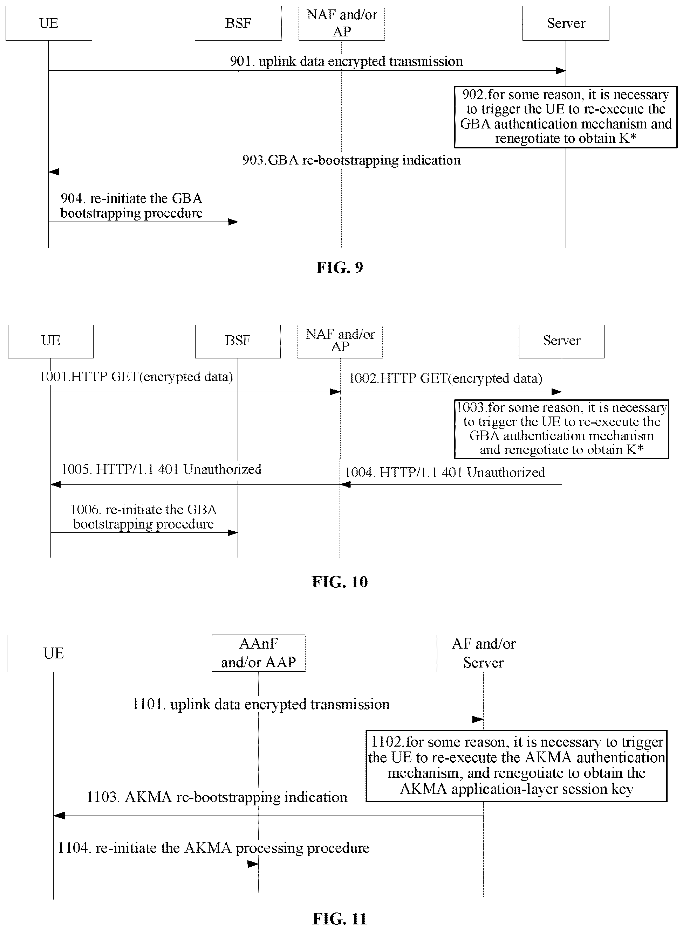

FIG. 9 is a schematic flow chart of a re-bootstrapping method for an enhanced GBA system provided by an embodiment of the present application. As shown in FIG. 9, the method includes the following steps.

Step 901: the UE sends uplink data to the server, which may carry service data information encrypted and protected by the GBA application session key K*.

Here, data transmission can be implemented using any application-layer communication protocol, for example, HTTP, CoAP, MQTT, or a private protocol.

Step 902: for some reason, the server triggers the UE to re-execute the GBA authentication mechanism and renegotiate to obtain the GBA application session key K*.

Here, several example reasons are provided. In practical applications, the reasons can be set to include but are not limited to the followings:
the server does not have a valid GBA application session key K* locally, for example, K* is invalid or no longer fresh, K* has exceeded or is about to exceed the key lifetime, etc.;
K* fails to meet a key validity condition set by the server according to the security policy, for example, K* has reached the upper limit of the reuse times, etc.;
failure to obtain K*, for example, due to the invalidation of the B-TID used to obtain K*, the server fails to obtain K* from the NAF and/or AP, etc.;
other situations, such as the server needs to actively re-establish an application layer security association with the UE after recovering from an abnormal condition, the shared K* between the server and the UE is inconsistent, etc.

Step 903: the server responds to the UE with a GBA re-bootstrapping indication message.

The specific form of the GBA re-bootstrapping indication message depends on the adopted application-layer communication protocol and is not limited herein.

Step 904: after receiving the GBA re-bootstrapping indication message, the UE re-initiates the GBA bootstrapping procedure with the BSF.

At this point, the UE can directly access the server through IP network routing. The UE and the server can use any application-layer communication protocol for data exchange without limitation, such as HTTP, CoAP, MQTT, a private protocol, etc.

FIG. 10 is a schematic flow chart of another re-bootstrapping method for an enhanced GBA system provided by an embodiment of the present application. As shown in FIG. 10, the method includes the following steps.

Step 1001: the UE sends an HTTP message to the server through the NAF and/or AP, which may carry service data information encrypted and protected by the GBA application-layer session key K*.

Step 1002: the NAF and/or AP forwards the HTTP message sent by the UE to the server.

Step 1003: for some reason, the server triggers the UE to re-execute the GBA authentication mechanism and renegotiate to obtain the GBA application-layer session key K*.

Here, the reason may be any one or more of those described in the method shown in FIG. 9, which will not be repeated here.

Step 1004: the server returns an HTTP 401 unauthorized message (equivalent to an indication message).

Step 1005: the NAF and/or AP forwards the HTTP 401 unauthorized message to the UE.

Step 1006: after receiving the HTTP 401 unauthorized message, the UE re-initiates the GBA bootstrapping procedure with the BSF.

At this point, the UE can access the server via the IP network routing through the NAF and/or AP network element. The network elements interact each other using the HTTP. In this case, the uplink encrypted data transmission message carrying user service data is an HTTP message, and the GBA re-bootstrapping indication message is the HTTP 401 unauthorized message.

The method provided in the embodiments of the present application enables, during the process in which the UE and the server complete GBA security authentication and securely exchange data based on the negotiated GBA application-layer session key K*, the server to perform a GBA re-bootstrapping procedure to re-establish a security association between the UE and the server when a situation arises that requires restarting the GBA mechanism. Depending on the message transmission method, there are two specific implementation methods. The first is direct transmission, as shown in FIG. 9, which specifically illustrates a GBA re-bootstrapping procedure when application-layer data is transmitted directly. The second is NAF and/or AP relay transmission, as shown in FIG. 10, which specifically illustrates a GBA re-bootstrapping procedure when application-layer data is relayed through the NAF and/or AP network element.

FIG. 11 is a schematic flow chart of a re-bootstrapping method for an enhanced AKMA system provided by an embodiment of the present application. As shown in FIG. 11, the method includes the following steps.

Step 1101: the UE sends uplink data to the AF and/or server, which may carry service data information encrypted and protected by the AKMA application-layer session key KA*.

Data transmission can be implemented using any application-layer communication protocol, for example, HTTP, CoAP, MQTT, or a private protocol.

Step 1102: for some reason, the AF and/or server triggers the UE to re-execute the AKMA security access and authentication mechanism, and renegotiate to obtain the AKMA application-layer session key KA*;

Here, several example reasons are provided. In practical applications, the reasons can be set to include but are not limited to the followings:
the server does not have a valid AKMA application session key KA* locally, for example, KA* is invalid or no longer fresh, KA* has exceeded or is about to exceed the key lifetime, etc.;
KA* fails to meet a key validity condition set by the AF and/or server according to the security policy, for example, KA* has reached the upper limit of the reuse times, etc.;
failure to obtain KA*, for example, due to the invalidation of the B-TID used to obtain KA*, the AF and/or server fails to obtain KA* from the AAnF and/or AAP, etc.;
other situations, such as the AF and/or server needs to proactively re-establish an application layer security association with the UE after recovering from an abnormal condition, the shared KA* between the server and the UE is inconsistent, etc.

Step 1103: the AF and/or server responds to the UE with an AKMA re-bootstrapping indication message.

Here, the specific form of the AKMA re-bootstrapping indication message depends on the adopted application-layer communication protocol and is not limited herein.

Step 1104: after receiving the re-bootstrapping indication message, the UE re-initiates the AKMA processing procedure to the AAnF and/or AAP to implement the AKMA re-bootstrapping.

For the enhanced AKMA system, when the AF and/or the server need to reset the AKMA operational state, a re-bootstrapping procedure can be used to enable the terminal to re-execute the AKMA security access and authentication process to implement the AKMA reset for the UE.

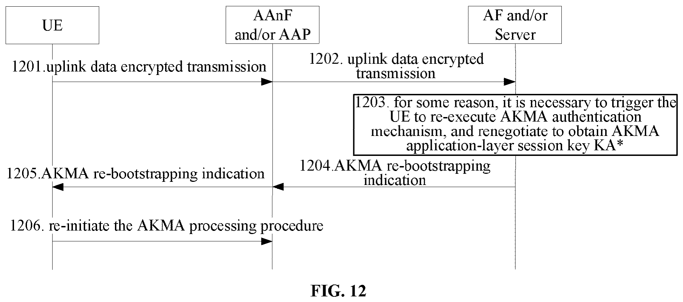

FIG. 12 is a schematic flow chart of another re-bootstrapping method for an enhanced AKMA system provided by an embodiment of the present application. As shown in FIG. 12, the method includes the following steps.

Step 1201: the UE sends uplink data to the AAnF and/or AAP, which may carry service data information encrypted and protected by the AKMA application-layer session key KA*.

Step 1202: the AAnF and/or AAP forwards the HTTP message sent by the UE to the AF and/or server.

Step 1203, for some reason, the AF and/or server triggers the UE to re-execute the AKMA secure access and authentication mechanism, and renegotiate to obtain AKMA application-layer session key KA*.

Here, the reason may be any one or more of those described in the methods shown in FIG. 11, which will not be repeated here.

Step 1204: the AF and/or server responds with an AKMA re-bootstrapping indication message to the AAnF and/or AAP.

Step 1205: the AAnF and/or AAP forwards the AKMA re-bootstrapping indication message to the UE.

Step 1206: after receiving the AKMA re-bootstrapping indication message, the UE re-initiates the AKMA processing procedure to the AAnF and/or AAP to implement the AKMA re-bootstrapping.

In addition to the direct transmission method shown in FIG. 11, in an enhanced AKMA system, there may also involve scenarios where messages exchanged between the UE and the AF and/or server are forwarded through network elements such as the AAP and NEF, etc. That is, the method shown in FIG. 12 can also be adopted, and the AKMA system may also implement the re-bootstrapping procedure by forwarding through network elements such as the AAP and NEF, etc.

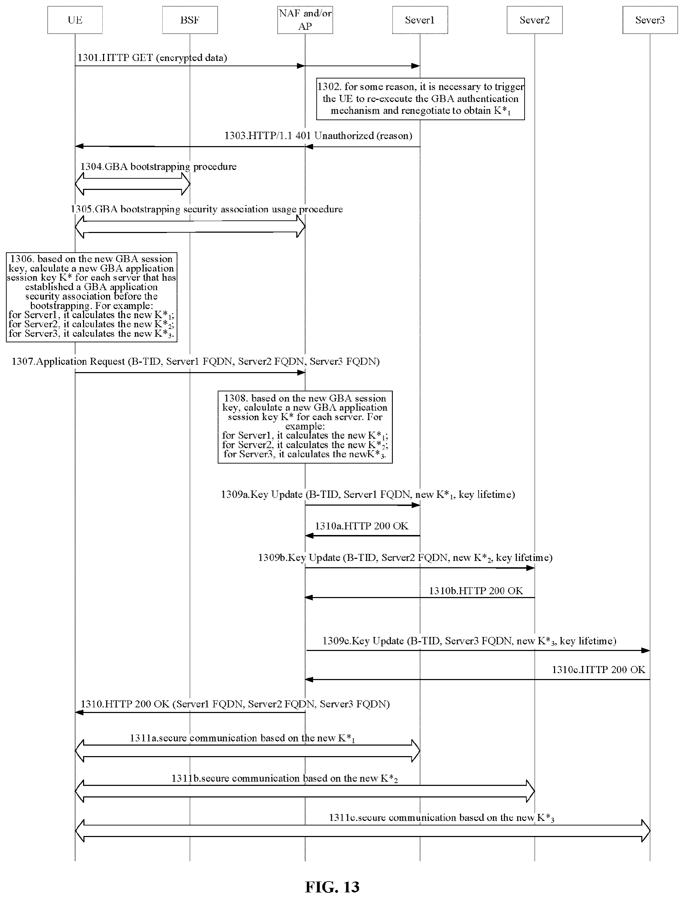

The following provides a specific process for a re-bootstrapping method in a GBA system with multiple servers. As shown in FIG. 13, the third device is a Bootstrapping Server Function (BSF), the second device includes a Network Application Function (NAF) and/or an Authentication Proxy (AP), and the first device includes: Server1, Server2, and Server3. The method includes the following steps.

Step 1301: the UE sends an HTTP message to Server 1 through the NAF and/or AP, which may carry service data information encrypted and protected by K*.

Step 1302: for some reason, Server 1 triggers the UE to re-execute the GBA authentication mechanism and renegotiate to obtain the GBA application-layer session key K*₁.

Here, the reason may be any one or more of those described in the methods shown in FIG. 9, which will not be repeated here. For example, the server does not have a valid GBA application-layer session key K*₁ locally.

Step 1303: Server 1 sends an HTTP/1.1 401 unauthorized message to the UE through the NAF and/or AP.

Here, the unauthorized message is equivalent to an indication message, and may carry the reason determined by Server1 for triggering the re-execution of the GBA authentication mechanism.

Step 1304: the UE re-initiates the GBA bootstrapping procedure with the BSF.

Step 1305: the UE and the NAF and/or AP re-initiate the GBA bootstrapping security association usage procedure.

It should be noted that the re-initiation of the GBA bootstrapping procedure can be triggered by a specific server (such as Server1 in FIG. 13), that is, step 1304 is executed after steps 1301 to 1303; or it can be actively triggered by the UE, that is, the UE proactively executes step 1304.

It is understandable that the method may include steps 1301 to 1303, i.e., the specific Server triggers the UE to initiate the GBA bootstrapping procedure.

The method may alternatively not include steps 1301 to 1303 and proceed directly to step 1304, i.e., the UE proactively re-initiates the GBA bootstrapping procedure.

After executing steps 1304 and 1305, the UE and the NAF and/or AP obtain a new GBA session key (which is equivalent to a type of second key), that is, a shared key negotiated between the UE and the NAF and/or AP by re-executing the GBA bootstrapping procedure and the GBA bootstrapping security association usage procedure.

Step 1306: the UE, based on the new GBA session key, calculates a new GBA application session key K* for each server that has established a GBA application security association before the bootstrapping, for example:
for Server1, it calculates the new K*1;
for Server2, it calculates the new K*2;
for Server3, it calculates the new K*3.

Step 1307: the UE sends an application request to the NAF and/or AP.

Here, the application request is equivalent to a first message, which may carry identification information of multiple first devices; the multiple first devices refer to multiple servers that have established an application security association with the terminal and are served by the second device.

For example, the application request may carry: B-TID, Server1 FQDN, Server2 FQDN, and Server3 FQDN.

FQDN represents the Fully Qualified Domain Name (FQDN) of the server , which is globally unique for each server.

Step 1308: the NAF and/or AP, based on the new GBA session key, calculates a new GBA application session key K* for each server respectively. For example:
for Server1, it calculates the new K*1;
for Server2, it calculates the new K*2;
for Server3, it calculates the new K*3.

Here, the method for calculating K*1, K*2, and K*3 may be pre-negotiated and determined by the UE and the NAF and/or AP, and both may use the same mechanism. The specific calculation method is not limited herein.

Step 1309a: the NAF and/or AP sends a key update to Server 1.

Here, the key update may carry the updated GBA application session key K*1 and/or key lifetime.

For example, the key update message may carry: B-TID, Server1 FQDN, new K*1, and key lifetime.

Here, the key update indicates a key update message; the key lifetime indicates the validity period of the key.

Step 1310a: Server1 responds to the NAF and/or AP with HTTP 200 OK.

Step 1309b: the NAF and/or AP sends a key update to Server2.

Here, the key update may carry: B-TID, Server2 FQDN, new K*2, and key lifetime.

Step 1310b: Server2 responds to the NAF and/or AP with HTTP 200 OK.

Step 1309c: the NAF and/or AP sends a key update to Server 3.

Here, the key update may carry: B-TID, Server3 FQDN, new K*3, and key lifetime.

Step 1310c: Server3 responds to the NAF and/or AP with HTTP 200 OK.

Step 1310: the NAF and/or AP sends HTTP 200 OK to the UE (Server1 FQDN, Server2 FQDN, Server3 FQDN).

Here, the NAF and/or AP may send a key update result (equivalent to a second message) to the UE to inform the UE whether the key and/or key lifetime have been successfully updated for some or all servers.

Step 1311 a: the UE and Server1 communicate securely based on the new K*1.

Step 1311b: the UE and Server2 communicate securely based on the new K*2.

Step 1311c: the UE and Server3 communicate securely based on the new K*3.

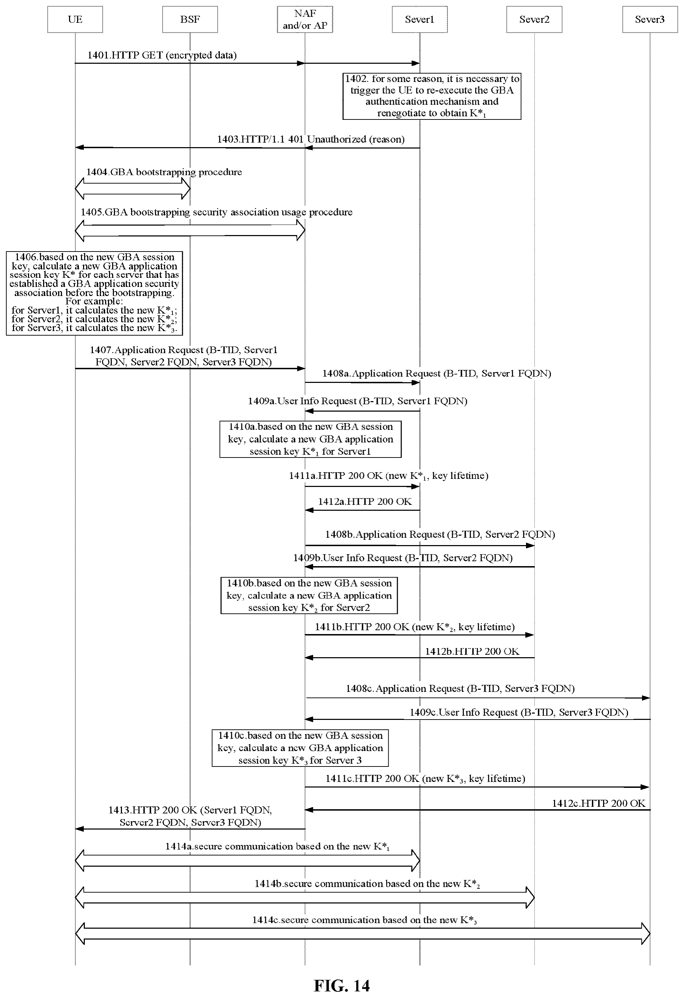

The following provides another specific process for a re-bootstrapping method in a GBA system with multiple servers. As shown in FIG. 14, the third device is a Bootstrapping Server Function (BSF), the second device includes a Network Application Function (NAF) and/or an Authentication Proxy (AP), and the first device includes: Server1, Server2, and Server3. The method includes the following steps.

Step 1401: the UE sends an HTTP message to Server 1 through the NAF and/or AP, which may carry service data information encrypted and protected by K*.

Step 1402: for some reason, Server 1 triggers the UE to re-execute the GBA authentication mechanism and renegotiate to obtain the GBA application-layer session key K*₁.

Here, the reason may be any one or more of those described in the methods shown in FIG. 9, which will not be repeated here. For example, the server does not have a valid GBA application-layer session key K*₁ locally.

Step 1403: Server 1 sends an HTTP/1.1 401 unauthorized message to the UE through the NAF and/or AP.

Here, the unauthorized message is equivalent to an indication message, and may carry the reason determined by Server1 for triggering the re-execution of the GBA authentication mechanism.

Step 1404: the UE re-initiates the GBA bootstrapping procedure with the BSF.

Step 1405: the UE and the NAF and/or AP re-initiate the GBA bootstrapping security association usage procedure.

It should be noted that the re-initiation of the GBA bootstrapping procedure can be triggered by a specific server (such as Server1 in FIG. 13), that is, step 1404 is executed after steps 1401 to 1403; or it can be proactively triggered by the UE, that is, the UE proactively executes step 1404.

It is understandable that the method may include steps 1401 to 1403, i.e., the specific server triggers the UE to initiate the GBA bootstrapping procedure.

The method may alternatively not include steps 1401 to 1403 and proceed directly to step 1404, i.e., the UE proactively re-initiates the GBA bootstrapping procedure.

After executing steps 1404 and 1405, the UE and the NAF and/or AP obtain a new GBA session key (which is equivalent to a type of second key), that is, a shared key negotiated between the UE and the NAF and/or AP by re-executing the GBA bootstrapping procedure and the GBA bootstrapping security association usage procedure.

Step 1406: the UE calculates, based on the new GBA session key, a new GBA application session key K* for each server that has established a GBA application security association before the bootstrapping, for example:
for Server1, it calculates the new K*1;
for Server2, it calculates the new K*2;
for Server3, it calculates the new K*3.

Step 1407: the UE sends an application request to the NAF and/or AP.

Here, the application request carries: B-TID, Server1 FQDN, Server2 FQDN, and Server3 FQDN.

Step 1408a: the NAF and/or AP sends the application request to Server1. The application request carries: B-TID and Server1 FQDN.

Step 1409a: Server 1 sends a User Info Request to the NAF and/or AP. The User Info Request carries: B-TID and Server 1 FQDN.

Step 1410a: The NAF and/or AP, based on the new GBA session key, calculates a new GBA application session key K*1 for Server1.

Step 1411a: the NAF and/or AP sends HTTP 200 OK to Server 1, carrying: new K*1 and key lifetime;

Step 1412a: Server 1 sends HTTP 200 OK to the NAF and/or AP.

Step 1408b: the NAF and/or AP sends an application request to Server2. The application request carries: B-TID and Server2 FQDN.

Step 1409b: Server2 sends a User Info Request to the NAF and/or AP. The User Info Request carries: B-TID and Server2 FQDN.

Step 1410b: the NAF and/or AP calculates, based on the new GBA session key, a new GBA application session key K*2 for Server2.

Step 1411b: the NAF and/or AP sends HTTP 200 OK to Server2, carrying new K*₂ and key lifetime.

Step 1412b: Server 2 sends HTTP 200 OK to the NAF and/or AP.

Step 1408c: the NAF and/or AP sends an application request to Server3. The application request carries B-TID and Server3 FQDN.

Step 1409c: Server3 sends the User Info Request to the NAF and/or AP. The User Info Request carries: B-TID and Server3 FQDN.

Step 1410c: the NAF and/or AP calculates, based on the new GBA session key, a new GBA application session key K*₃ for Server 3.

Step 1411c: the NAF and/or AP sends HTTP 200 OK to Server2, carrying new K*₃ and key lifetime.

Step 1412c: Server 3 sends HTTP 200 OK to the NAF and/or AP.

Here, as shown in steps 1408-1412 (e.g., steps 1408a-1412a, steps 1408b-1412b, and steps 1408c-1412c), after the NAF and/or AP receives the identification information of each server from the UE (i.e., the UE executes step 1407), it sends an application request to each server based on the identification information of each server (e.g., steps 1408a, 1408b, and 1408c). Each server then returns a User Info Request (e.g., steps 1409a, 1409b, and 1409c). After receiving the User Info Request returned by each server, the NAF and/or AP generates a corresponding new first key for each server (e.g., steps 1410a, 1410b, and 1410c) and proactively pushes the new first key to each server (e.g., steps 1411a, 1411b, and 1411c).

The process of key generation and key push for each server can be performed collectively, that is, after receiving all User Info Requests, the NAF and/or AP generates a new key for each server in a unified manner, and then pushes it collectively. Alternatively, the process can be performed separately, that is, upon receiving the User Info Request from a particular server, the NAF and/or AP generates a new key for that server and pushes it immediately.

Step 1413: the NAF and/or AP sends HTTP 200 OK to the UE, carrying: Server1 FQDN, Server2 FQDN, and Server3 FQDN.

Step 1414a: secure communication based on the new K*₁.

Step 1414b: secure communication based on the new K*₂.

Step 1414c: secure communication based on the new K*₃.

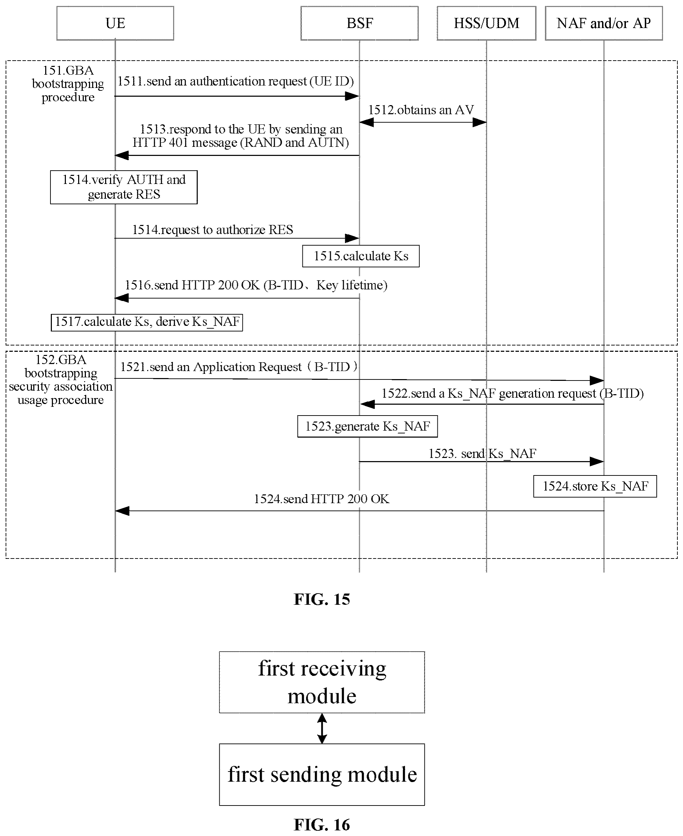

FIG. 15 is a schematic flow chart of a method for determining a second key provided by an embodiment of the present application. As shown in FIG. 15, the terminal and the second device (e.g., an NAF and/or an AP) re-execute the GBA bootstrapping procedure and the GBA bootstrapping security association usage procedure. Ultimately, the terminal and the second device negotiate and determine a shared key (i.e., a second key, which may also be referred to as a GBA session key). The method includes the following steps.

Step 151: GBA bootstrapping procedure. Specifically, step 151 includes the following steps.

Step 1511: the UE sends an authentication request to the BSF, carrying the user identity (UE ID).

Step 1512: the BSF obtains an Authentication Vector (AV) from the HSS or UDM based on the user identity.

The authentication vector is used by the BSF to derive the GBA session intermediate key Ks.

Step 1513: the BSF responds to the UE by sending an HTTP 401 message (carrying RAND and AUTN) and instructs the UE to use GBA authentication; wherein
the RAND is a random number and the AUTN is an authentication token.

Step 1514: the UE performs AKA verification of AUTH and generates RES; the UE requests the BSF to authorize the RES;

Step 1515: the BSF verifies the RES and calculates Ks = CK ∥ IK;
wherein the RES is the user response, CK is the cipher key, and IK is the integrity key.

Step 1516: the HTTP 200 OK is sent to the UE, carrying the B-TID and the key lifetime corresponding to Ks.

Step 1517: the UE calculates Ks=CK ∥ IK, and then derives Ks_NAF.

Step 152: GBA bootstrapping security association usage procedure. Specifically, step 152 includes:
step 1521: the UE sends an application request to the NAF, carrying the B-TID;
step 1522: the NAF sends a Ks_NAF generation request to the BSF, carrying B-TID;
step 1523: the BSF generates Ks_NAF (i.e., GBA session key) based on the Ks corresponding to the B-TID and sends Ks_NAF to the NAF.
step 1524: the NAF stores Ks_NAF and sends HTTP 200 OK to the UE.

It should be noted that the method for determining the second key may adopt the method shown in FIG. 15 above, or may be determined by other methods, such as negotiation between the UE and the second device (NAF and/or AP) according to a certain rule, or determination through a predefined protocol. The method for determining the second key is not limited.

FIG. 16 is a schematic structural diagram of a communication apparatus provided by an embodiment of the present application. As shown in FIG. 16, the apparatus is applied to a first device, and the apparatus includes:
a first sending module, configured to send an indication message to a terminal; wherein the indication message is used to instruct the terminal to perform a re-bootstrapping operation.

It should be noted that the communication apparatus provided by the above embodiments, when implementing the corresponding communication method, is only exemplified by the division of the above program modules. In practical applications, the above-mentioned processing can be assigned to different program modules as needed. That is, the internal structure of the first device may be divided into different program modules to complete all or part of the above-described processing. In addition, the apparatuses provided by the above embodiments and the corresponding method embodiments shown in FIG. 6 are based on the same concept. For specific implementation details, it may refer to the method embodiments, which will not be repeated here.

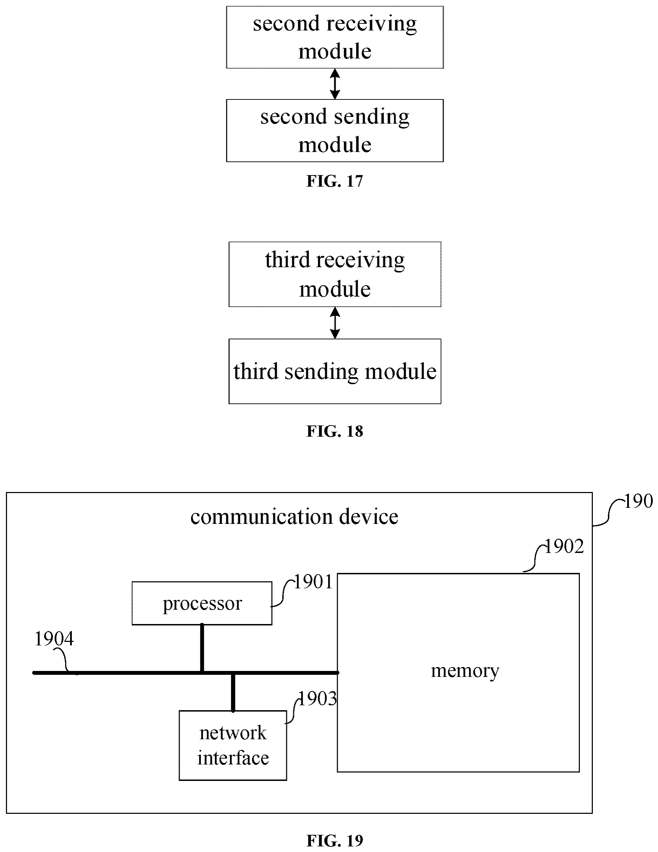

FIG. 17 is a schematic structural diagram of another communication apparatus provided by an embodiment of the present application. As shown in FIG. 17, the apparatus is applied to a terminal, and the apparatus includes:
a second receiving module, configured to receive an indication message from a first device; wherein the indication message is used to instruct the terminal to perform a re-bootstrapping operation;
a second sending module, configured to send a re-bootstrapping request message to a third device.

It should be noted that the communication apparatus provided by the above embodiments, when implementing the corresponding communication method, are only exemplified by the division of the above program modules. In practical applications, the above-mentioned processing can be assigned to different program modules as needed. That is, the internal structure of the terminal may be divided into different program modules to complete all or part of the above-described processing. In addition, the apparatuses provided by the above embodiments and the corresponding method embodiments shown in FIG. 7 are based on the same concept. For specific implementation thereof, it may refer to the method embodiments, which will not be repeated here.

FIG. 18 is a schematic structural diagram of yet another communication apparatus provided by an embodiment of the present application. As shown in FIG. 18, the apparatus is applied to a second device, and the apparatus includes:
a third receiving module, configured to receive a first message sent by a terminal; wherein the first message carries identification information of multiple first devices; and the multiple first devices are multiple first devices that have established an application security association with the terminal and are served by the second device.

It should be noted that the communication apparatus provided by the above embodiments, when implementing the corresponding communication method, is only exemplified by the division of the above program modules. In practical applications, the above-mentioned processing can be assigned to different program modules as needed. That is, the internal structure of the second device may be divided into different program modules to complete all or part of the above-described processing. In addition, the apparatuses provided by the above embodiments and the corresponding method embodiments shown in FIG. 8 are based on the same concept. For specific implementation details, it may refer to the method embodiments, which will not be repeated here.

FIG. 19 is a schematic structural diagram of a communication device provided by an embodiment of the present application. As shown in FIG. 19, the communication device 190 includes: a processor 1901 and a memory 1902 configured to store a computer program executable by the processor.

When the communication device is the first device, the processor 1901 is configured to execute the computer program to send an indication message to a terminal, wherein the indication message is used to instruct the terminal to perform a re-bootstrapping operation. Specifically, the communication device may also execute the method shown in FIG. 6. This embodiment is based on the same concept as the method embodiment shown in FIG. 6. For specific implementation details, it may refer to the method embodiment, which will not be repeated here.

When the communication device is a terminal, the processor 1901 is configured to execute the computer program to receive an indication message from a first device, wherein the indication message is used to instruct the terminal to perform a re-bootstrapping operation; and send a re-bootstrapping request message to a third device. Specifically, the communication device may also execute the method shown in FIG. 7. This embodiment is based on the same concept as the method embodiment shown in FIG. 7. For specific implementation details, it may refer to the method embodiment, which will not be repeated here.

When the communication device is applied to a second device, the processor 1901 is configured to execute the computer program to receive a first message sent by a terminal, wherein the first message carries identification information of multiple first devices, and the multiple first devices are multiple first devices that have established an application security association with the terminal and are served by the second device. Specifically, the communication device may also execute the method shown in FIG. 8. This embodiment is based on the same concept as the method embodiment shown in FIG. 8. For specific implementation details, it may refer to the method embodiment, which will not be repeated here.

In practical applications, the communication device 190 may further include: at least one network interface 1903. The various components in the communication device 190 are coupled together via a bus system 1904. It should be understood that the bus system 1904 is used to enable connection and communication between these components. In addition to the data bus, the bus system 1904 also includes a power bus, a control bus, and a status signal bus. However, for the sake of clarity, all of these buses are labeled as the bus system 1904 in FIG. 19. The number of processors 1901 may be at least one. The network interface 1903 is used for wired or wireless communication between the communication device 190 and other devices.

In the embodiments of the present application, the memory 1902 is used to store various types of data to support the operation of the communication device 190.

The methods disclosed in the above embodiments of the present application can be applied to, or implemented by, the processor 1901. The processor 1901 may be an integrated circuit chip with signal processing capabilities. During implementation, each step of the above method can be accomplished by integrated logic circuits in the hardware of the processor 1901 or by instructions in software form. The processor 1901 may be a general-purpose processor, a Digital Signal Processor (DSP), or other programmable logic device, discrete gate or transistor logic device, discrete hardware components, etc. The processor 1901 can implement or execute the various methods, steps, and logic block diagrams disclosed in the embodiments of the present application. A general-purpose processor may be a microprocessor or any conventional processor, etc. The steps of the methods disclosed in the embodiments of the present application can be directly implemented and executed by a hardware decoding processor, or by a combination of hardware and a software module in the decoding processor. The software module may be located on a storage medium, which resides in the memory 1902. The processor 1901 reads information from the memory 1902 and, in conjunction with its hardware, completes the steps of the above method.

In an exemplary embodiment, the communication device 190 may be implemented by one or more Application Specific Integrated Circuits (ASICs), Digital Signal Processors (DSPs), programmable logic devices (PLDs), Complex Programmable Logic Devices (CPLDs), Field-Programmable Gate Arrays (FPGAs), general-purpose processors, controllers, Microcontroller Units (MCUs), microprocessors, or other electronic components, to perform the aforementioned method.

An embodiment of the present application further provides a computer-readable storage medium, on which a computer program is stored.

When the computer-readable storage medium is applied to the first device, the computer program is executed by a processor to send an indication message to the terminal, wherein the indication message is used to instruct the terminal to perform a re-bootstrapping operation. Specifically, the computer program may also perform the method shown in FIG. 6. This embodiment is based on the same concept as the method embodiment shown in FIG. 6. For specific implementation details, it may refer to the method embodiment, which will not be repeated here.

When the computer-readable storage medium is applied to a terminal, the computer program is executed by a processor to receive an indication message from a first device, wherein the indication message is used to instruct the terminal to perform a re-bootstrapping operation; and send a re-bootstrapping request message to a third device. Specifically, the computer program may also execute the method shown in FIG. 7. This embodiment is based on the same concept as the method embodiment shown in FIG. 7. For specific implementation details, it may refer to the method embodiment, which will not be repeated here.

When the computer-readable storage medium is applied to a second device, the computer program is executed by a processor to receive a first message sent by a terminal, wherein the first message carries identification information of multiple first devices, and the multiple first devices are multiple first devices that have established an application security association with the terminal and are served by the second device. Specifically, the computer program may also execute the method shown in FIG. 8. This embodiment is based on the same concept as the method embodiment shown in FIG. 8. For specific implementation details, it may refer to the method embodiment, which will not be repeated here.

In some embodiments provided by the present application, it should be understood that the disclosed apparatus and method can be implemented in other ways. The device embodiments described above are merely illustrative. For example, the division of the units is only a logical function division. In actual implementation, there may be other division methods. For instance, multiple units or components can be combined, or may be integrated into another system, or certain features may be omitted or not implemented. In addition, the coupling, direct coupling, or communication connection between the various components shown or discussed may be through certain interfaces, and the indirect coupling or communication connection between the devices or units can be electrical, mechanical or other forms.

The units described above as separate components may or may not be physically separated, and the components displayed as units may or may not be physical units. That is, they may be located in one place or distributed across multiple network units. Depending on actual needs, some or all of the units may be selected to achieve the objects of the solution of this embodiment.

In addition, each functional unit in various embodiments of the present application may be integrated into one processing unit, or each unit may exist as a separate unit, or two or more units may be integrated into one unit. The above integrated units can be implemented in the form of hardware or software functional units.

It will be understood by a person skilled in the art that all or part of the steps of the above-mentioned method embodiments may be implemented by hardware related to program instructions. The aforementioned program may be stored in a computer-readable storage medium. When the program is executed, it performs the steps of the above-mentioned method embodiments. The storage medium includes various media that can store program codes, such as removable storage devices, Read-Only Memories (ROMs), Random Access Memories (RAMs), magnetic disks, or optical disks.

Alternatively, if the integrated unit is implemented in the form of a software functional unit and sold or used as an independent product, it may be stored in a computer-readable storage medium. Based on such an understanding, essential parts, or parts contributing to the prior art of the technical solution of the present application may be implemented in a form of a software product. The computer software product is stored in a storage medium, and includes instructions to cause a computer device (which can be a personal computer, a server, or a network device, etc.) to execute all or part of the methods described in various embodiments of the present application. The aforementioned storage media include: removable hard disk, Read-Only Memory (ROM), Random Access Memory (RAM), magnetic disk or optical disc and other media that can store program code.

It should be noted that the terms "first", "second", and the like are used to distinguish similar objects, and are not intended to describe a specific order or sequence.

In addition, the technical solutions described in the embodiments of the present application may be freely combined in any manner, provided that no conflict arises.

The above are merely specific embodiments of the present application, but the protection scope of the present application is not limited thereto. Any modifications or substitutions that can be easily conceived by the person skilled in the art within the technical scope disclosed by the present application shall fall within the scope of protection of the present application. Therefore, the protection scope of the present application should be subject to the scope defined by the claims.

## Claims

1. A communication method, performed by a first device, wherein the method comprises:
sending an indication message to a terminal, wherein the indication message is used to instruct the terminal to perform a re-bootstrapping operation.

2. The method according to claim 1, wherein the method further comprises: receiving uplink data from the terminal, wherein the uplink data comprises at least data encrypted with a first key, the first key is a Generic Bootstrapping Architecture (GBA) application session key or an Authentication and Key Management for Applications (AKMA) application session key;
the sending the indication message to the terminal comprises:
sending the indication message to the terminal when the first key fails to meet a key validity condition set by the first device according to a security policy, or when it is necessary to trigger an update of the first key.

3. The method according to claim 2, **characterized in that** the first key fails to meet the key validity condition set by the first device according to the security policy, comprising at least one of the followings:
that an upper limit of reuse times of the first key has been reached;
an application-allowed usage duration of the first key has been reached; or
that the first key has been exposed externally.

4. The method according to claim 1, **characterized in that** the sending the indication message to the terminal comprises one of the followings:
directly sending the indication message to the terminal; or
sending the indication message to a second device, wherein the indication message is sent by the second device to the terminal.

5. The method according to claim 2, **characterized in that** the receiving the uplink data from the terminal comprises one of the followings:
receiving the uplink data directly sent by the terminal; or
receiving the uplink data sent by a second device, wherein the uplink data is sent from the terminal to the second device.

6. The method according to any one of claims 1 to 5, **characterized in that**, in the case that the first device communicates directly with the terminal, uplink data and/or the indication message are transmitted based on at least one of the following protocols:
Hypertext Transfer Protocol (HTTP), Constrained Application Protocol (CoAP), Message Queuing Telemetry Transport (MQTT) Protocol, or a predefined private protocol.

7. The method according to any one of claims 1 to 5, **characterized in that**, in the case that the first device communicates with the terminal via a second device, uplink data and/or the indication message are transmitted based on HTTP.

8. The method according to claim 1, **characterized in that** the method further comprises:
receiving a new first key and/or key lifetime sent by a second device, and updating a local first key and/or key lifetime.

9. The method according to any one of claims 1 to 8, **characterized in that**, when the method is applied to a Generic Bootstrapping Architecture (GBA) system, the first device is a server, and a second device comprises a Network Application Function (NAF) and/or an Authentication Proxy (AP).

10. The method according to any one of claims 1 to 8, **characterized in that**, when the method is applied to an Authentication and Key Management for Applications (AKMA) system, the first device comprises an Application Function (AF) and/or a server, and a second device comprises at least one of the followings: an AKMA Anchor Function (AanF), an AKMA Authentication Proxy (AAP), an Authentication Proxy (AP), or a Network Element Function (NEF).

11. A communication method, executed by a terminal, the method comprising:
receiving an indication message from a first device; wherein the indication message is used to instruct the terminal to perform a re-bootstrapping operation;
sending a re-bootstrapping request message to a third device.

12. The method according to claim 11, **characterized in that** the receiving the indication message from the first device comprises one of the followings:
receiving the indication message directly sent by the first device;
receiving the indication message sent by a second device, wherein the indication message is sent by the first device to the second device.

13. The method according to claim 11, wherein the method further comprises:
sending uplink data to the first device, wherein the uplink data comprises at least data encrypted with a first key; the first key is a Generic Bootstrapping Architecture (GBA) application session key or an Authentication and Key Management for Applications (AKMA) application session key.

14. The method according to claim 13, wherein the sending the uplink data to the first device comprises one of the followings:
directly sending the uplink data to the first device; or
sending the uplink data to a second device, wherein the uplink data is sent by the second device to the first device.

15. The method according to any one of claims 11 to 14, wherein, in the case that the first device communicates directly with the terminal, uplink data and/or the indication message are transmitted based on at least one of the following communication protocols:
Hypertext Transfer Protocol (HTTP), Constrained Application Protocol (CoAP), Message Queuing Telemetry Transport (MQTT) protocol, or a predefined private protocol.

16. The method according to any one of claims 11 to 14, wherein, in the case that the first device communicates with the terminal via a second device, uplink data and/or the indication message are transmitted based on HTTP.

17. The method according to claim 11, wherein the method further comprises:
sending a first message to a second device, wherein the first message carries identification information of at least one first device, and the at least one first device is at least one first device that has established an application security association with the terminal and is served by the second device.

18. The method according to claim 17, wherein the method further comprises:
receiving a second message sent by the second device, wherein the second message carries all or part of update results of the first device updating a first key and/or key lifetime.

19. The method according to claim 17, wherein the method further comprises:
generating, based on a second key, a corresponding new first key for each of the at least one first device, and storing the corresponding new first key;
wherein the second key is a shared key negotiated between the terminal and the second device by re-executing a Generic Bootstrapping Architecture (GBA) bootstrapping procedure and a GBA bootstrapping security association usage procedure.

20. The method according to any one of claims 11 to 18, wherein when the method is applied to a Generic Bootstrapping Architecture (GBA) system, the first device is a server, and a second device comprises a Network Application Function (NAF) and/or an Authentication Proxy (AP), and the third device is a Bootstrapping Server Function (BSF).

21. The method according to any one of claims 11 to 18, wherein when the method is applied to an Authentication and Key Management for Applications (AKMA) system, the first device comprises an (Application Function) AF and/or a server, and a second device comprises at least one of the followings: an AKMA Anchor Function (AanF), an AKMA Authentication Proxy (AAP), an Authentication Proxy (AP), or a Network Element Function (NEF), and the third device comprises: an AAnF and/or an AAP.

22. A communication method, performed by a second device, the method comprising:
receiving a first message sent by a terminal; wherein the first message carries identification information of at least one first device; and the at least one first device is at least one first device that has established an application security association with the terminal and is served by the second device.

23. The method according to claim 22, wherein the method further comprises:
generating, according to the identification information of at least one first device in the first message, a respective new first key and/or key lifetime corresponding to each of the at least one first device;
sending the new first key and/or key lifetime to the corresponding first device.

24. The method according to claim 22, wherein the method further comprises:
sending a respective third message to each of the at least one first device according to the identification information of at least one first device in the first message, wherein the third message carries identification information corresponding to the first device;
receiving a fourth message sent by each of the at least one first device;
generating a respective corresponding new first key and/or key lifetime for each of the at least one first device;
sending the corresponding new first key and/or key lifetime to each of the at least one first device.

25. The method according to claim 22, wherein the method further comprises:
determining a key transmission mode adopted by the at least one first device;
when the first device adopts a push mode, generating a new first key and/or key lifetime corresponding to the first device according to the identification information of the first device, and sending the new first key and/or key lifetime to the corresponding first device; and/or
when the first device adopts a request mode, sending a third message to the first device according to the identification information of the first device, wherein the third message carries the identification information of the first device;
receiving a fourth message sent by the first device;
generating a new first key and/or key lifetime corresponding to the first device;
sending the new first key and/or key lifetime to the first device.

26. The method according to any one of claims 22 to 25, wherein the method further comprises:
generating, based on a second key, a corresponding new first key for each of the at least one first device, and storing the corresponding new first key;
wherein the second key is a shared key negotiated between the terminal and the second device by re-executing a Generic Bootstrapping Architecture (GBA) bootstrapping procedure and a GBA bootstrapping security association usage procedure.

27. The method according to any one of claims 23 to 25, wherein the method further comprises at least one of the followings:
receiving, from each of the at least one first device, a result indicating successful reception of the new first key and/or key lifetime;
receiving, from each of the at least one first device, a result indicating failure to receive the new first key and/or key lifetime; or
failing to receive, from the first device, a result indicating successful reception of the new first key and/or key lifetime.

28. The method according to claim 27, wherein the method further comprises:
sending a second message to the terminal, wherein the second message carries all or part of update results of the first device updating a first key and/or key lifetime.

29. The method according to claim 22, wherein the method further comprises:
receiving an indication message from the first device; wherein the indication message is used to instruct the terminal to perform a re-bootstrapping operation;
sending the indication message to the terminal.

30. The method according to claim 22, wherein the method further comprises:
receiving uplink data from a terminal, wherein the uplink data comprises at least service data encrypted with a first key;
sending the uplink data to the first device.

31. The method according to claim 22, wherein when the method is applied to a Generic Bootstrapping Architecture (GBA) system, the first device is a server, and a second device comprises a Network Application Function (NAF) and/or an Authentication Proxy (AP).

32. The method according to claim 22, wherein when the method is applied to an Authentication and Key Management for Applications (AKMA) system, the first device comprises an (Application Function) AF and/or a server, and a second device comprises at least one of the followings: an AKMA Anchor Function (AanF), an AKMA Authentication Proxy (AAP), an Authentication Proxy (AP), or a Network Element Function (NEF).

33. A communication apparatus, applied to a first device, the apparatus comprising:
a first sending module, configured to send an indication message to a terminal; wherein the indication message is used to instruct the terminal to perform a re-bootstrapping operation.

34. A communication apparatus, applied to a terminal, the apparatus comprising:
a second receiving module, configured to receive an indication message from a first device; wherein the indication message is used to instruct the terminal to perform a re-bootstrapping operation;
a second sending module, configured to send a re-bootstrapping request message to a third device.

35. A communication apparatus, applied to a second device, the apparatus comprising:
a third receiving module, configured to receive a first message sent by a terminal; wherein the first message carries identification information of at least one first device; and the at least one first device is at least one first device that has established an application security association with the terminal and is served by the second device.

36. A communication apparatus, comprising a memory, a processor, and a computer program stored on the memory and executable on the processor, **characterized in that**, the processor is configured to execute the program to implement the steps of the method according to any one of claims 1 to 10; or the processor is configured to execute the program to implement the steps of the method according to any one of claims 11 to 21; or the processor is configured to execute the program to implement the steps of the method according to any one of claims 22 to 32.

37. A computer-readable storage medium storing a computer program, **characterized in that**, the computer program is used to be executed by a processor to implement the steps of the method according to any one of claims 1 to 10; or the computer program is used to be executed by a processor to implement the steps of the method according to any one of claims 11 to 21; or the computer program is used to be executed by a processor to implement the steps of the method according to any one of claims 22 to 32.
